# EUROPÄISCHE PATENTSCHRIFT

(11) **EP 3 436 230 B1**
(45) Veröffentlichungstag und Bekanntmachung des Hinweises auf die Patenterteilung: **29.04.2020**
(21) Anmeldenummer: 17710211.8
(22) Anmeldetag: 09.03.2017
(51) Int. Cl.: B29C 45/16, B29C 45/76, B65D 47/08, B65D 53/02

(54) **AUFSATZ FÜR EINE WASCH- ODER SPÜLMITTELFLASCHE SOWIE VERFAHREN ZUR HERSTELLUNG EINES SOLCHEN AUFSATZES**
ATTACHMENT FOR A WASHING OR RINSING AGENT BOTTLE, AND METHOD FOR PRODUCING SUCH AN ATTACHMENT
CAPUCHON POUR BOUTEILLES DE DÉTERGENT OU DE PRODUITS VAISSELLE AINSI QUE PROCÉDÉ DE FABRICATION D'UN TEL CAPUCHON

(30) Priorität: 01.04.2016 DE 102016205451
(43) Veröffentlichungstag der Anmeldung: 06.02.2019
(73) Patentinhaber: Henkel AG & Co. KGaA, 40589 Düsseldorf (DE)
(72) Erfinder: HENNING, Ingomar, 51588 Nümbrecht (DE); STRATHMANN, Stefan, 40699 Erkrath (DE); ORLICH, Bernhard, 40547 Düsseldorf (DE)
(86) Internationale Anmeldenummer: PCT/EP2017/055606
(87) Internationale Veröffentlichungsnummer: WO 2017/167565

(56) Entgegenhaltungen:
- FR-A1- 2 752 818
- US-A1- 2005 145 525

## Beschreibung

Die Erfindung betrifft einen Aufsatz für eine Wasch- oder Spülmittelflasche sowie ein Verfahren zur Herstellung eines solchen Aufsatzes.

Aus der WO 2015/090690 A1 ist ein Aufsatz in Form eines Verschlusses bekannt, der auf einen Flaschenhals einer Wasch- oder Spülmittelflasche aufgeschraubt werden kann. Der Verschluss weist einen bewegbaren Klappdeckel und ein Dichtungselement auf. Das Dichtungselement sorgt dafür, dass durch den Verschluss kein Wasch- oder Spülmittel aus der Flasche treten kann, wenn der Klappdeckel sich in einer geschlossenen Position befindet.

Die Anforderungen an das Dichtungselement bzw. an einen dichten Verschluss sind bei einer Wasch- oder Spülmittelflasche vergleichsweise hoch. Zum einen werden derartige Flaschen im wachsendem Maße durch den elektronischen Handel (eCommerce) vertrieben, so dass zum Beispiel bei einer Auslieferung durch einen Paketdienst sich die Flasche für längere Zeit in beliebiger Position, auch mit dem Flaschenhals und dem Verschluss nach unten geneigt, befinden kann. Im letztgenannten Fall würde das Wasch- oder Spülmittel direkt an dem Dichtungselement anliegen. Ein undichter Verschluss würde somit unweigerlich zu einer Leckage des Flascheninhalts führen. Insbesondere wenn es sich bei dem Flascheninhalt um ein Wasch- oder Spülmittel handelt, das Inhaltsstoffe zur Reduktion der Oberflächenspannung beinhaltet, führen bereits kleinste Fehler oder Unregelmäßigkeiten bei der Abdichtung zur unerwünschten Leckage.

Oft handelt es sich bei Wasch- oder Spülmittelflaschen und dem Aufsatz um Kunststoffteile, beispielsweise aus Polyethylen (PE) oder Polypropylen (PP), wobei für die Dichtungselemente eine Kombination unterschiedlich harter Kunststoffe bevorzugt gewählt wird, um eine gute Dichtwirkung zu erzielen, zum Beispiel ein weiches Flaschenmaterial (HDPE) und ein relativ zum Flaschenmaterial harter (PP)- Verschluss oder ein hartes Flaschenmaterial (PET) und ein relativ zum Flaschenmaterial weicher PP-Verschluss. Bekannt sind beispielsweise auch separat hergestellte Dichtringe, die in den Verschluss oder zwischen Verschluss und Flasche eingesetzt werden, um bei ähnlich harten Materialkombinationen einen Härteunterschied zu erzeugen. Diese gesonderte Montage des Dichtrings ist aber aufwändig und führt zu hohen Herstellkosten.

Auch ist es bekannt, den Aufsatz im Mehrkomponenten-Spritzgussverfahren aus einer Hauptkomponente und wenigstens einer Nebenkomponente herzustellen, wobei durch eine der beiden Komponenten das Dichtungselement geformt wird. Beim Mehrkomponenten-Spritzgussverfahren wird dabei zuerst ein erstes Element des Aufsatzes aus einer der beiden Komponenten durch Spritzgießen hergestellt, an das dann aus der anderen Komponente ein zweites Element bzw. der Rest angespritzt wird. Bei entsprechenden Stückzahlen lässt sich dabei das Mehrkomponenten-Spritzgussverfahren kostengünstig einsetzen.

Ein solcher Aufsatz, der dem Oberbegriff des Anspruchs 1 entspricht, wird in FR2752818 offenbart.

Wenn beim Mehrkomponenten-Spritzgussverfahren das zuerst gespritzte Element für den Spritzguss des zweiten Elements als formgebende Begrenzung dient, also als ein Teil der Spritzgussform für das zweite Element angesehen werden kann, kann ein Fehler beim Spritzgießen des ersten Elements dazu führen, dass auch das zweite Element fehlerhaft ausgebildet ist. Beispielsweise kann der Fehler auftreten, dass das Spritzgießen des ersten Elements überhaupt nicht erfolgt und unerkannt bleibt. Dies kann zur Folge haben, dass dann der gesamte Aufsatz nur aus einer der beiden Komponenten gebildet wird, da diese Komponente auch den leergebliebenen Raum der anderen Komponente ausfüllt. Daraus kann resultieren, dass der Verschluss die an ihn gestellten Anforderungen, insbesondere die Anforderungen hinsichtlich Dichtheit, nicht mehr erfüllt.

Eine einfache und verlässliche Detektion des oben beschriebenen Fehlers insbesondere bei großen Stückzahlen ist ohne weiteres nicht möglich. Insbesondere wenn die erste Komponente und die zweite Komponente transluzent sind oder die gleiche Farbe aufweisen, ist eine visuelle Unterscheidung zwischen einem intakten Verschluss und einem nicht-intakten Verschluss nur mit hohen Aufwand oder gar nicht möglich, da sich diese, wenn überhaupt, nur geringfügig äußerlich unterscheiden. Auch der Aufwand für eine Funktionsüberprüfung des einzelnen Verschlusses, ob dieser ausreichend dicht verschließt oder nicht, würde in keinem vertretbaren Verhältnis zu den anderen Herstellungskosten stehen.

Der Erfindung liegt daher die Aufgabe zu Grunde, einen Aufsatz für eine Wasch- oder Spülmittelflasche bereit zu stellen, der in einem Mehrkomponenten-Spritzgussverfahren hergestellt ist, eine ausreichend gute Dichtwirkung aufweist und der sich zuverlässig und kostengünstig herstellen lässt.

Die der Erfindung zu Grunde liegende Aufgabe wird mit der Merkmalskombination gemäß Ansprüche 1 und 10 gelöst. Ausführungsbeispiele der Erfindung können den Unteransprüchen entnommen werden.

Erfindungsgemäß ist vorgesehen, dass die Hauptkomponente oder die Nebenkomponente einen Marker aufweist, auf den bei UV-Licht oder IR-Licht ein Kontrast zwischen der Hauptkomponente und der Nebenkomponente zurückzuführen ist. Mit anderen Worten führt der Marker dazu, dass bei UV-Licht oder IR-Licht sich die beiden Komponenten voneinander unterscheiden lassen. Während bei sichtbarem Licht sich die Komponenten nicht voneinander unterscheiden, weil sie beide transluzent sind oder weil sie beide die gleiche Farbe aufweisen, bewirkt der Marker, dass bei nicht-sichtbarem Licht ein reproduzierbarer Kontrast gegeben ist.

Vorzugsweise unterscheiden sich Hauptkomponente und Nebenkomponente in ihrem Schussgewicht. Die Hauptkomponente kann dabei ein größeres Schussgewicht als die Nebenkomponente aufweisen. Die Schussgewichte von Hauptkomponente und Nebenkomponente können auch gleichgroß sein. Die Nebenkomponente kann auch als erste Komponente und die Hauptkomponente kann auch als zweite Komponente bezeichnet werden.

Unter UV-Licht sind elektromagnetische Wellen mit einer Wellenlänge zwischen 1 nm und ca. 390 nm zu verstehen. Dem UV-Licht schließt sich mit größer werdender Wellenlänge das sichtbare Lichtspektrum an, welches Wellenlängen von ca. 390 bis ca. 780 nm aufweist. Mit IR-Licht (Infrarotstrahlungen) werden elektromagnetische Wellen mit einer Wellenlänge größer als 780 nm bezeichnet. Eine obere Grenze für Wellenlängen des IR-Lichts kann bei 50 µm oder gar 1 mm liegen.

Der Marker kann ein UV-Marker sein, der bei Beaufschlagung durch UV-Licht ein sichtbares Licht emittiert. Somit handelt es sich bei dem UV-Marker um eine Substanz, die aus dem nicht sichtbaren UV-Licht (beispielsweise 290 bis 390 nm) Energie absorbiert und nach intramolekularen Zwischenspiel einen Teil der absorbierten Energie mit einer Wellenlänge emittiert, die in den Bereich des sichtbaren Lichts fällt (beispielsweise 400 nm bis 700 nm). Bei dem Marker handelt es sich vorzugsweise um einen fluoreszierenden Stoff, der mit dem Ende der Bestrahlung durch das UV-Licht praktisch zeitgleich die Emission des sichtbaren Lichts einstellt.

Bei dem Marker muss es sich aber zwangsläufig nicht um eine Substanz handeln, die durch elektromagnetische Wellen angeregt wird und dadurch sichtbares Licht emittiert. Es kann sich auch um eine Substanz handeln, die Strahlungen bestimmter Wellenlänge, die in den Bereich des UV-Lichts oder in den Bereich des IR-Lichts fallen, absorbiert, ohne dabei sichtbares Licht zu emittieren. Diese Absorption, die für das bloße Auge nicht erkennbar sein muss, lässt sich aber im Rahmen beispielsweise der Infrarotspektroskopie detektieren.

Bei dem Marker in Form eines UV-Maklers kann es sich um einen optischen Aufheller handeln, der die im Tageslicht befindlichen, aber nicht sichtbaren UV-Anteile in sichtbares Licht umformt. Bei Beaufschlagung durch UV-Licht mittels einer künstlichen Lichtquelle beispielsweise in Form einer Quecksilberdampflampe oder durch UV-Leuchtdioden tritt der Aufheller deutlich gegenüber der Komponente ohne Aufheller hervor.

Geeignete Gruppierungen für die Moleküle von optischen Aufhellern sind heterocyclische Fünfringe bzw. Verbindungen, bei denen ein kondensierter Aromat direkt mit einem Heteroaromaten verbunden ist wie Thiazole, Pyrazole, Oxadiazole oder Triazine (zum Beispiel das 2,4-Dimethoxy-6-(1'-pyrenyl)-1,3,5-triazin). Optische Aufheller können auch insbesondere sein: Stilben-Verbindungen wie Blankophore; Ethylen-, Phenylethylen- und Thiophen-Derivate, die zwei heteroaromatische Reste (z. B. den Benzoxazol-Rest) enthalten; Cumarin- und Carbostyril-Derivate; Naphthalimide (*N*-Methyl-4-methoxy-naphthalimid).

Vorzugsweise weist die das Dichtungselement bildende Nebenkomponente den Marker auf. Dadurch tritt die Nebenkomponente bei Beaufschlagung mit UV-Licht oder IR-Licht deutlich gegenüber der Hauptkomponente hervor, sodass über das Vorhandensein der Nebenkomponente eine positive Aussage möglich ist.

Die Nebenkomponente kann weicher sein als die Hauptkomponente. Auch kann die Hauptkomponente weicher als die Nebenkomponente sein. In einer Ausführung der Erfindung sind Hauptkomponente und Nebenkomponente gleich hart.

Die Nebenkomponente weist vorzugsweise eine Shore-A-Härte von 30 bis 90 ShA bei 23 °C auf. In einem Ausführungsbeispiel beträgt die Shore-A-Härte 60 bis 80 ShA. Die Angaben beziehen sich jeweils auf die Komponenten im spritzgegossenen Zustand.

Die Hauptkomponente kann aus Kunststoff sein, vorzugsweise aus Polypropylen (PP) oder Polypropylen (PE). Die Nebenkomponente kann ein thermoplastisches Elastomer (TPE) sein.

Unter einer Wasch- oder Spülmittelflasche ist eine Flasche zu verstehen, die zur Aufnahme von flüssigem Wasch- oder Spülmittel geeignet ist und einen Flaschenhals mit einer Öffnung aufweist, um die Flasche zu befüllen und zu entleeren. Der Flaschenhals ist dabei geeignet, mit dem Aufsatz verbunden zu sein. Der Aufsatz kann beispielsweise ein Verschluss zum Verschließen der Flasche oder ein Ausgießer sein, durch den die Abgabe des flüssigen Wasch- oder Spülmittel erleichtert wird. Zumindest im oberen Bereich ist der Flaschenhals vorzugsweise hohlzylindrisch ausgebildet. Die Menge, die sich in die Flasche füllen lässt, kann 100 ml bis 3000 ml betragen.

Der Verschluss kann ein Basisteil zum Befestigen des Verschlusses an der Wasch- oder Spülmittelflasche und einen Klappdeckel zum Öffnen und Schließen des Verschlusses umfassen. Vorzugsweise ist der Verschluss als Kunststoffteil aus PP oder PE ausgebildet. Der Klappdeckel, der bevorzugt am Basisteil beweglich befestigt ist, kann über ein Filmscharnier einstückig mit diesem verbunden sein.

Der Klappdeckel kann einen als Dichtungselement dienenden Verschlussstopfen umfassen, der in einer geschlossenen Position des Klappdeckels in einer Ausgusstülle des Basisteils sitzt. Verschlussstopfen und Ausgusstülle sind dabei so ausgelegt, dass in geschlossener Position des Klappdeckels kein Wasch- oder Spülmittel aus der Flasche gelangen kann.

Im obigen Ausführungsbeispiel liegt das Dichtungselement an einer Dichtfläche an, die Teil der Ausgusstülle bzw. Teil des Basisteils und somit Teil des Verschlusses ist. Alternativ können der Aufsatz und das Dichtungselement auch so ausgebildet sein, dass das Dichtungselement in Einsatzlage des Aufsatzes an einer Dichtfläche der Wasch- oder Spülmittelflasche anliegt. Beispielsweise ist es möglich, dass das Dichtungselement ein Dichtring ist, der an einer ringförmigen Stirnfläche des zylindrischen Flaschenhalses der Wasch- oder Spülmittelflasche anliegt. Es ist auch denkbar, dass das Dichtungselement in Einsatzlage des Aufsatzes an einer Mantelfläche des zylinderförmigen Flaschenhalses anliegt.

In einem Ausführungsbeispiel bildet die Nebenkomponente ein weiteres mit dem Dichtungselement einstückig ausgebildetes Element, das eine von außen zugängliche oder von außen gut sichtbare Außenfläche aufweist. Beispielsweise kann der oben beschriebene Verschlussstopfen einstückig mit einem Deckeldach des Klappdeckels verbunden sein, wobei das Deckeldach die von außen zugängliche bzw. die von außen sichtbare Außenfläche ausbildet.

Vorzugsweise ist der Verschluss so ausgebildet, dass eine Unterscheidung mittels des Markers in geschlossener Position des Klappdeckels möglich ist. Das Element, das mit dem Dichtungselement einstückig verbunden ist und auch aus der ersten Komponente ist, kann hinsichtlich Volumen, Gewicht und/oder Ausmaße größer sein als das eigentliche Dichtungselement. Beispielsweise kann das spritzgegossene Volumen des mit dem Dichtungselement einstückig verbundenen Elements zwei- oder auch dreimal größer sein als das Dichtungselement, wobei das Dichtungselement nur das umfassen soll, was für die Abdichtfunktion notwendig ist.

Eine weitere Aufgabe der Erfindung, die Bereitstellung eines Verfahrens zur Herstellung eines Aufsatzes für eine Wasch- oder Spülmittelflasche, wobei der Aufsatz vorzugsweise eine der oben beschriebenen Ausgestaltungen aufweist, wird mit der Merkmalskombination von Anspruch 10 gelöst. Ausführungsbeispiele des erfindungsgemäßen Verfahrens können den Unteransprüchen von Anspruch 10 entnommen werden.

Das erfindungsgemäße Verfahren sieht vor, dass der das Dichtungselement aufweisende Aufsatz in einem Mehrkomponenten-Spritzgussverfahren spritzgegossen wird. Der Aufsatz weist die Nebenkomponente zur Ausbildung des Dichtungselements sowie die Hauptkomponente auf, wobei eine der Komponenten den Marker umfasst. Nach dem Spritzgussverfahren wird der Aufsatz mit UV-Licht oder IR-Licht beaufschlagt, und eine Aufnahmeeinheit erstellt unter dem UV-Licht oder dem IR-Licht eine Aufnahme des Aufsatzes. Die Aufnahme wird ausgewertet, um das Vorhandensein eines auf den Marker zurückzuführenden Kontrastes zwischen der Nebenkomponente und der Hauptkomponente festzustellen.

Zur Bereitstellung des UV-Lichts oder des IR-Lichts, also zur Bereitstellung der elektromagnetischen Strahlung mit entsprechenden Wellenlängen, wird bevorzugt eine gesonderte Lichtquelle wie beispielsweise UV-Leuchtdioden verwendet. Es ist aber auch denkbar, auf Tageslicht oder auch das Licht von beispielsweise Leuchtstoffröhren zurückzugreifen und die Anteile des elektromagnetischen Spektrums, die nicht dem sichtbaren Licht (390 nm bis 780 nm) zuzuordnen sind, für das erfindungsgemäßer Verfahren zu nutzen.

Ein Aufsatz kann als Ausschuss gewertet werden, wenn dieser den Kontrast bei UV-Licht oder IR-Licht nicht aufweist. Beispielsweise kann ein bestimmter Schwellenwert für den Kontrast definiert werden. Nur wenn dieser Schwellenwert überschritten wird, wird der entsprechende Aufsatz als gut empfunden und nicht als Ausschuss gewertet. Auch kann unter UV-Licht oder IR-Licht ein Vergleich mit einem Referenzbild eines Muster-Aufsatzes erfolgen, wobei dann etwaige Abweichungen unterhalb eines bestimmten Schwellenwert liegen müssen, um den entsprechenden Aufsatz nicht aussortieren zu müssen.

Vorzugsweise werden im Mehrkomponenten-Spritzgussverfahren zunächst die Nebenkomponente, die das Dichtungselement bildet, und danach die Hauptkomponente spritzgegossen.

In dem erfindungsgemäßen Verfahren kann als Marker eine Substanz in der Nebenkomponente verwendet werden, die eine Absorption im IR-Spektrum bei einer vorbestimmten Wellenzahl verursacht, bei der eine Absorption im IR-Spektrum der Hauptkomponente nicht gegeben ist. Bei dem Marker muss es sich somit nicht zwangsläufig um eine Substanz handeln, die nur zum Zwecke der Kontrastbildung der Nebenkomponente zugemischt wird. Es kann sich dabei auch um eine Substanz handeln, die in einer der beiden Komponenten ohnehin schon vorhanden ist und im IR-Spektrum (oder im UV-Spektrum) eine charakteristische Absorption zeigt, die die andere Komponente nicht aufweist. Beispielsweise kann es sich bei der Nebenkomponente um ein TPE handeln, das bei einer Wellenzahl von rund 700/cm (oder speziell 685 bis 695/cm) und/oder bei ca. 540 (speziell 535 bis 545/cm) eine entsprechende Absorption im IR-Spektrum aufweist.

Anhand der in der Zeichnung dargestellten Ausführungsbeispiele wird die Erfindung näher erläutert. Es zeigen:
- Figur 1: einen Aufsatz in Form eins Verschlusses mit einem Basisteil und einem Klappdeckel;
- Figur 2: den Verschluss der Figur 1 mit dem Klappdeckel in geöffneter Position;
- Figur 3: vier Verschlüsse der Figur 1 von oben;
- Figur 4: einen weiteren Aufsatz in Form eines Ausgießers im Längsschnitt;
- Figur 5: im größeren Maßstab das Detail V der Figur 4; und
- Figur 6: einen weiteren Aufsatz in Form einer Kappe im Längsschnitt.

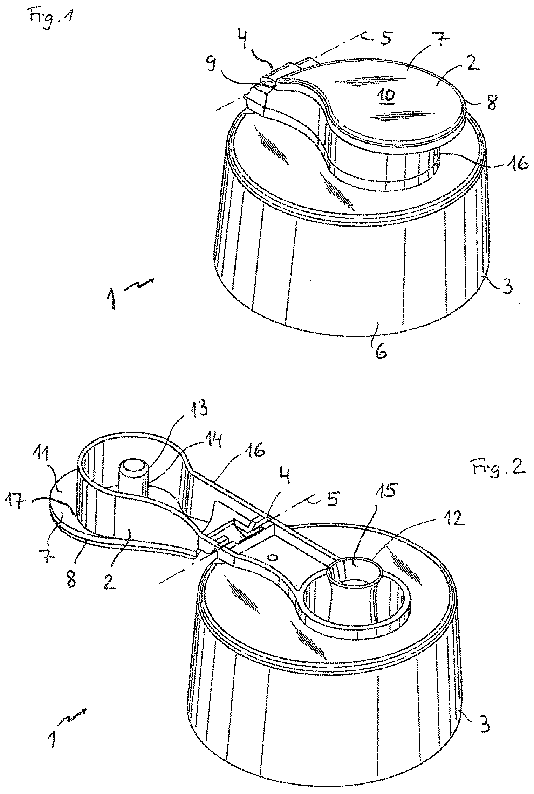

Figur 1 zeigt in perspektivischer Ansicht einen Aufsatz in Form eines Verschlusses, der in seiner Gesamtheit mit 1 bezeichnet wird. Der Aufsatz oder Verschluss 1 weist einen Klappdeckel 2 und ein Basisteil 3 auf. Während Figur 1 den Klappdeckel in einer geschlossenen Position zeigt, zeigt Figur 2 den Klappdeckel 2 in einer geöffneten Position. Der Klappdeckel 2 ist über ein Filmscharnier 4 klappbar oder verschwenkbar mit dem Basisteil 3 verbunden. Eine Schwenkachse, um die der Klappdeckel 2 geschwenkt werden kann, ist mit 5 bezeichnet.

Das Basisteil weist eine zylindrische Grundform mit einer Mantelfläche 6 auf, an deren in Figur 1 und 2 nicht sichtbaren Innenseite Befestigungsmittel vorgesehen sind, um den Verschluss 1 an einem Flaschenhals einer hier nicht dargestellten Flasche für Wasch- oder Spülmittel zu befestigen. Beispielsweise können die Befestigungsmittel ein Innengewinde aufweisen, das mit einem Außengewinde an dem Flaschenhals der Flasche zusammenwirkt. Die Befestigungsmittel können auch Teil einer Rastverbindung zwischen dem Verschluss 1 und dem Flaschenhals sein. Der Durchmesser der Mantelfläche 6 des Basisteils kann beispielsweise 1 bis 6 cm oder 1,5 bis 3 cm betragen.

Der Klappdeckel 2 umfasst ein Deckeldach 7, das von einem umlaufenden Rand 8 begrenzt wird. Von oben betrachtet weist das Deckeldach 7 in etwa die Form eines asymmetrischen Tropfens auf. In einem vorderen Teil des Klappdeckels 2 ist das Deckeldach 7 in etwa halbkreisförmig; der entsprechende Rand 8 stellt in diesem vorderen Bereich einen Halbkreis dar. In einem hinteren Teil des Klappdeckels 2 läuft das Deckeldach 7 zur Schwenkachse 5 spitz zu. Entsprechend weist das Deckeldach 7 in der Nähe der Schwenkachse 5 eine Spitze 9 auf. Das Deckeldach 7, dass im Ausführungsbeispiel der Figuren 1 und 2 eben ausgebildet ist, aber auch gekrümmt oder gebogen sein kann, weist eine Außenfläche 10 und eine Innenfläche 11 auf, wobei die Innenfläche 11 in geschlossener Position des Klappdeckels 2 (siehe Figur 1) in Richtung des Basisteils 3 gewandt ist. Die Außenfläche 10 zeigt in der Darstellung der Figur 1 nach oben, während die Innenfläche 11 in Richtung Basisteil 3 nach unten zeigt.

Leicht versetzt zu einer Mittelachse der zylindrischen Mantelfläche 6 des Basisteils 3 ist eine Ausgusstülle 12 vorgesehen, durch die der flüssige Inhalt aus der Wasch- oder Spülmittelflasche, auf die der Verschluss 1 aufgesetzt werden kann, hindurchfließen kann, wenn sich der Klappdeckel 2 in der geöffneten Position befindet. In geschlossener Position des Klappdeckels 2 sitzt in der Ausguss-tülle 12 ein Verschlussstopfen 13. Der Verschlussstopfen 13 weist die Grundform eines Hohlzylinders bzw. Hohlkegels mit einer Mantelfläche 14 auf. In geschlossener Position des Klappdeckels 2 liegt die Mantelfläche 14 an einer Innenfläche 15 der Ausguss-tülle 12 an, sodass kein flüssiger Inhalt aus der Flasche durch die Ausgusstülle 12 mehr gelangen kann. Der Verschlussstopfen 13 stellt somit ein Dichtungselement dar, durch welches die Ausgusstülle 12 abgedichtet oder verschlossen werden kann.

Der Verschluss 1 ist aus zwei unterschiedlichen Komponenten hergestellt. Eine erste Komponente oder Nebenkomponente, beispielsweise ein thermoplastisches Polyolefin (PP), bildet dabei den Verschlussstopfen 13 sowie das Deckeldach 7. Der Verschlussstopfen 13 und das Deckeldach 7 sind somit aus einem gleichen Material einstückig miteinander verbunden.

Der Rest des Verschlusses 1, nämlich das Basisteil 3 mit der Ausgusstülle 12 sowie einer Seitenwand 16 des Klappdeckels 2, die über das Filmscharnier 4 das Deckeldach 6 und den Verschlussstopfen 13 mit dem Basisteil 3 verbindet, sind aus einer zweiten Komponente bzw. einer Hauptkomponente. Diese Hauptkomponente ist bevorzugt Polypropylen oder Polyethylen.

Der Verschluss 1 ist in einem Mehrkomponenten-Spritzgussverfahren hergestellt, wobei zunächst in einer Spritzgussform das Deckeldach 7 mit dem Verschlussstopfen 13 spritzgegossen wird. Somit entsteht zunächst der besagte asymmetrische Tropfen, von dessen Innenfläche 11 sich im Wesentlichen senkrecht der hohlzylindrische Verschlussstopfen 13 erstreckt (unter Berücksichtigung von Entformungsschrägen handelt es sich beim Verschlussstopfen 13 im engeren Sinne um einen Hohlkegel). An das Deckeldach 7 wird dann die Hauptkomponente angespritzt, um das Basisteil 3 und die Seitenwand 16 mit dem Filmscharnier 4 zu formen.

Das zuerst gegossene Element, bestehend aus dem Verschlussstopfen 13 und dem Deckeldach 7, bildet für die Elemente des Verschlusses 1, die im zweiten Schritt aus der Hauptkomponente spritzgegossen werden, einen Teil der formgebenden Begrenzungsflächen. Mit anderen Worten stellt die bereits spritzgegossene Nebenkomponente einen Teil der Kavität für die Hauptkomponente dar. Die Kavität für die zweite Komponente kann dabei aus Formteilen oder Formhälften der Kavität für die Nebenkomponente bestehen. Die spritzgegossene Nebenkomponente kann beispielsweise in einem Hauptteil ihrer Kavität verbleiben, wenn daran die Hauptkomponente angespritzt wird.

Die Seitenwand 16 wird an die Innenfläche 11 des Klappdeckels 2 gespritzt. Ein oberer Rand 17 der Seitenwand 16 liegt in der Ebene der Innenfläche 11. Sollte beim Spritzgießen der ersten Komponente ein Fehler auftreten und unerkannt bleiben, so ist nicht auszuschließen, dass beim Spritzen der zweiten Komponente nicht nur das Basisteil 3 und die Seitenwand 16, sondern auch das Deckeldach 7 und der Verschlussstopfen 13 aus der Hauptkomponente gebildet werden. Wenn sich die Nebenkomponente und die Hauptkomponente in ihren visuellen Eigenschaften (Transparenz, Farbe etc., jeweils bei Bestrahlung durch sichtbares Licht) nicht unterscheiden, ist es schwierig, zu überprüfen, ob wie vorgesehen das Deckeldach 7 und der Verschlussstopfen 13 aus der Nebenkomponente bestehen, während der Rest des Verschlusses 1 aus der Hauptkomponente besteht. Ein fehlerhaftes, aber nicht erkanntes Spritzgießen kann dazu führen, dass die sorgfältig ausgelegte Abdichtung zwischen dem Verschlussstopfen 13 und der Ausgusstülle 15, die die besondere Materialpaarung miteinbezieht, nicht mehr funktioniert. Es besteht somit die Gefahr, dass der Verschluss 1, nur bestehend aus der Hauptkomponente, nicht ausreichend dicht ist.

Aus diesem Grund ist hier vorgesehen, dass die Nebenkomponente, die das Deckeldach 7 und den Verschlussstopfen 13 bildet, einen Marker aufweist, der dazu führt, dass bei UV-Licht sich die Nebenkomponente gegenüber der Hauptkomponente erkennbar unterscheiden lässt. Der Marker absorbiert das UV-Licht und emittiert Strahlungen mit einer Wellenlänge des sichtbaren Lichts, so dass ein farblicher Unterschied zwischen den Komponenten mit bloßem Auge erfassbar ist.

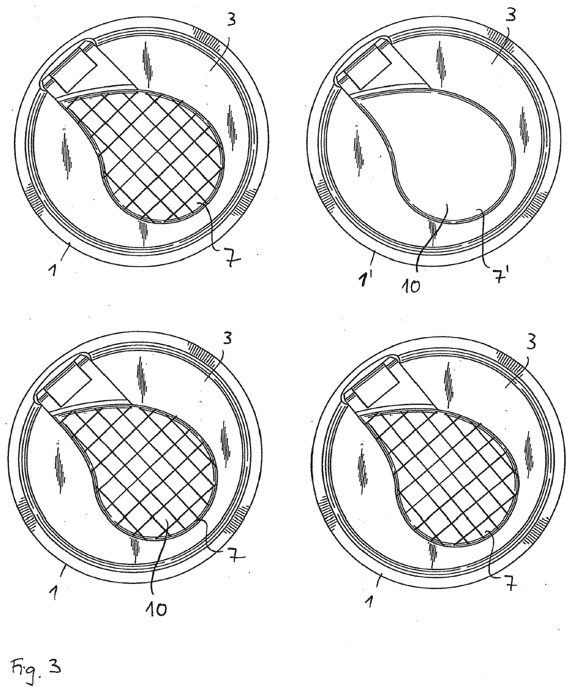

Figur 3 zeigt vier Verschlüsse von oben, von denen drei mit 1 und der Verschluss oben rechts mit 1' bezeichnet werden. Die drei Verschlüsse 1 weisen jeweils das Deckeldach 7 auf, das sich von dem Deckeldach 7' des Verschlusses 1' unterscheidet. Diese Unterscheidung tritt durch den in der Nebenkomponente vorgesehenen Marker bei UV-Licht hervor. Die Schraffur der Außenfläche 10 des Deckeldachs 7 soll für eine besondere farbliche Ausprägung stehen, die sich aufgrund des Markers bei Bestrahlung durch UV-Licht im sichtbaren Lichtbereich zeigt. Beim Verschluss 1' der Figur 3 zeigt sich diese besondere farbliche Ausprägung nicht. Offensichtlich weist der Verschluss 1' die Nebenkomponente nicht auf, sondern wurde vollständig aus der Hauptkomponente spritzgegossen.

Mit einer Aufnahmeeinheit, beispielsweise mit einer Digitalkamera, können bei UV-Licht Aufnahmen von den vier Verschlüssen aufgenommen und einer Auswertung zugeführt werden. Bei der Auswertung wird dann überprüft, ob ein entsprechender Kontrast zwischen dem Deckeldach 7 und dem Rest des Verschlusses 1 gegeben ist oder eine Übereinstimmung der aktuellen Aufnahme mit einer Referenzaufnahme gegeben ist. So kann zum Beispiel auch das teilweise Fehlen oder ein Verschieben der Dichtungskomponente detektiert werden. Wird ein solcher Kontrast bzw. eine Übereinstimmung der Aufnahmen bei Bestrahlung durch UV-Licht detektiert, besteht der entsprechende Verschluss die Überprüfung und wird der weiteren Verwendung zugeführt, beispielsweise wird der Verschluss 1 nach Befüllen der Wasch- oder Spülmittelflasche auf diese aufgeschraubt. Der Verschluss 1', der kein Kontrast zeigt (siehe Figur 3, rechts oben), ist fehlerhaft produziert und wird dem Ausschuss zugeführt. Somit kann dem Mehrkomponenten-Spritzgussverfahren innerhalb des Herstellprozesses eine automatisierte Überprüfung nachgeschaltet sein, um fehlerhafte Verschlüsse aussortieren zu können.

Die gleichzeitige Aufnahme von vier Verschlüssen ist exemplarisch zu verstehen. Es können auch deutlich mehr als vier Verschlüsse gleichzeitig überprüft werden. Auch ist es möglich, dass die spritzgegossenen Verschlüsse jeweils einzeln nacheinander der Kamera zugeführt und die Auswertung entsprechend sukzessive durchgeführt wird.

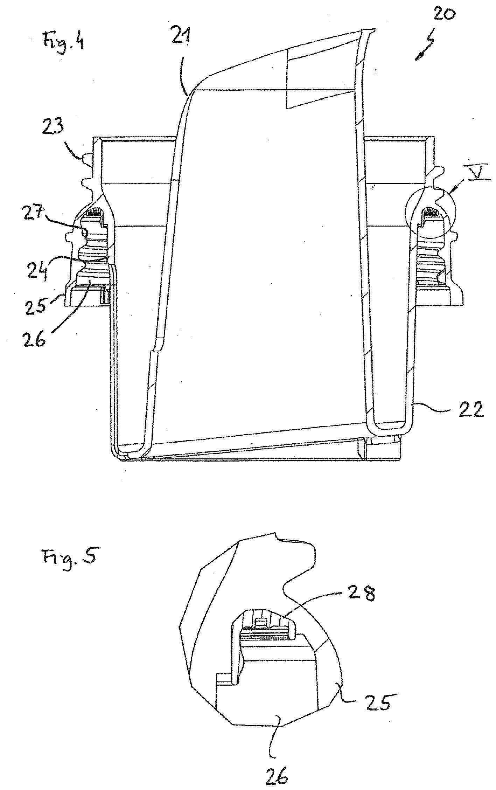

Figur 4 zeigt einen weiteren Aufsatz in Form eines Ausgießers 20. Der Aufsatz oder Ausgießer 20 weist eine Ausgusstülle 21 und einen zylindrischen Basiskörper 22 auf. An dem Basiskörper 22 ist in einem oberen Bereich ein Außengewinde 23 vorgesehen, auf das eine nicht dargestellte Verschlusskappe aufgeschraubt werden kann. Eine Innenwand 24 und eine Außenwand 25, deren Außendurchmesser beispielsweise 30 bis 60 mm beträgt, begrenzen einen Aufnahmeraum 26 zur Aufnahme eines Flaschenhals einer Wasch- oder Spülmittelflasche, auf die der Ausgießer aufgesetzt werden kann. In ein Innengewinde 27 im Aufnahmeraum lässt sich ein Außengewinde am Flaschenhals hineinschrauben.

Am oberen Ende des Aufnahmeraums 26, siehe insbesondere Figur 5, die Detail V von Figur 4 vergrößert zeigt, ist ein Dichtungselement 28 vorgesehen. Auch hier soll der Aufsatz 20 in einem Mehrkomponenten-Spritzgussverfahren hergestellt worden sein, wobei die Nebenkomponente das Dichtungselement 28 und die Hauptkomponente den Rest des Aufsatzes/Ausgießers 20 bilden. Das Dichtungselement ist bevorzugt aus TPE, während ansonsten der Ausgießer aus PP oder PE ist.

Die Nebenkomponente umfasst einen UV-Marker, der bei Bestrahlung durch UV-Licht sichtbares Licht emittiert und somit einen sichtbaren Kontrast herstellt zu der zweiten Komponente, die diesen UV-Marker nicht aufweist. Um zu überprüfen, ob das Dichtungselement 28 auch wie vorgesehen durch die Nebenkomponente und nicht fehlerbedingt durch die Hauptkomponente gebildet wurde, kann der Ausgießer 20 in der Darstellung der Figur 4 von unten mit UV-Licht bestrahlt werden. Anhand von Aufnahmen einer Kamera, die ebenfalls von unten in Richtung des Innenraums 26 gerichtet ist, kann der durch den UV-Marker hervorgerufene Kontrast detektiert werden und als Basis für die Entscheidung dienen, ob es sich um Ausschuss handelt oder nicht. Insbesondere können bei dem Vergleich von aktueller Aufnahme und Referenzaufnahmen Fehlerbilder detektiert und klassifiziert werden, was ein gutes Werkzeug zur Fehlerbehebung und damit zur Verbesserung der Produktionsprozesse darstellt. Auch können unkritische Fehler "freigeschaltet" werden, wenn diese keine Beeinträchtigung der Funktion darstellen.

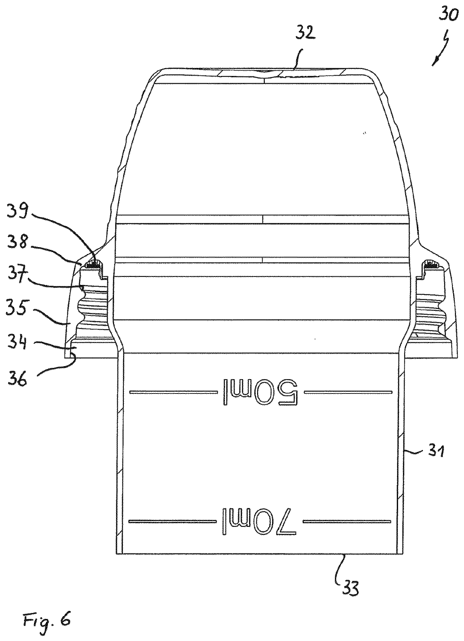

Ein weiteres Ausführungsbeispiel für den Aufsatz in Form einer Kappe oder Verschlusskappe 30 zeigt Figur 6. Die Kappe ist becherförmig ausgebildet und weist eine im Wesentlichen zylindrische Seitenwand 31 auf, an deren einem Ende sich ein Boden 32 anschließt. Dem Boden 32 gegenüberliegend befindet sich ein offenes Ende 33 der Kappe 30.

Ungefähr in der Mitte zwischen dem Boden 32 und dem offenen Ende 33 ist ein Aufnahmeraum 34 zur Aufnahme eines oberen Endes eines Flaschenhalses einer Flasche (nicht dargestellt) vorgesehen. Der Aufnahmeraum 34 wird begrenzt durch eine Außenwand 35 und die zylindrische Seitenwand 31, wobei die zylindrische Seitenwand 31 eine radial innenliegende Begrenzung darstellt. An der Innenseite oder an der dem Aufnahmeraum zugewandten Seite 36 der Außenwand 35 ist ein Innengewinde 37 vorgesehen, das mit einem Außengewinde am Flaschenhals der Flasche zusammenwirken kann. An einem oberen Ende 38 des Aufnahmeraums 34 ist ein Dichtungselement 39 angeordnet, das dem Dichtungselement 28 des Ausführungsbeispiels der Figuren 4 und 5 entspricht.

### Bezugszeichenliste

- 1: Aufsatz/Verschluss
- 2: Klappdeckel
- 3: Basisteil
- 4: Filmscharnier
- 5: Schwenkachse
- 6: Mantelfläche
- 7: Deckeldach
- 8: Rand
- 9: Spitze
- 10: Außenfläche
- 11: Innenfläche
- 12: Ausgusstülle
- 13: Verschlussstopfen/Dichtungselement
- 14: Mantelfläche
- 15: Innenfläche
- 16: Seitenwand
- 17: oberer Rand

- 20: Aufsatz/Ausgießer
- 21: Ausgusstülle
- 22: Basiskörper
- 23: Außengewinde
- 24: Innenwand
- 25: Außenwand
- 26: Aufnahmeraum
- 27: Innengewinde
- 28: Dichtungselement

- 30: Aufsatz/Kappe
- 31: Seitenwand
- 32: Boden
- 33: offenes Ende
- 34: Aufnahmeraum
- 35: Außenwand
- 36: Innenseite
- 37: Innengewinde
- 38: oberes Ende
- 39: Dichtungselement

## Patentansprüche

1. Aufsatz (1; 20; 30) für eine Wasch- oder Spülmittelflasche, wobei der Aufsatz (1; 20; 30) in einem Mehrkomponenten-Spritzgussverfahren aus einer Hauptkomponente und wenigstens einer Nebenkomponente hergestellt ist, wobei durch die Nebenkomponente ein Dichtungselement (13; 28) geformt ist, **dadurch gekennzeichnet, dass** die Hauptkomponente oder die Nebenkomponente einen Marker aufweist, auf den bei UV-Licht oder IR-Licht ein Kontrast zwischen der Hauptkomponente und der Nebenkomponente zurückzuführen ist.

2. Aufsatz (1; 20; 30) nach Anspruch 1, **dadurch gekennzeichnet, dass** die das Dichtelement (13; 28; 39) bildende Nebenkomponente den Marker aufweist.

3. Aufsatz (1; 20; 30) nach Anspruch 1 oder 2, **dadurch gekennzeichnet, dass** die Nebenkomponente weicher ist als die Hauptkomponente.

4. Aufsatz (1; 20; 30) nach Anspruch 1 oder 2, **dadurch gekennzeichnet, dass** die Nebenkomponente härter ist als die Hauptkomponente.

5. Aufsatz (1; 20; 30) nach einem der Ansprüche 1 bis 4, **dadurch gekennzeichnet, dass** die Nebenkomponente eine Shore-A-Härte von 30 bis 90 ShA bei 23°C aufweist.

6. Aufsatz (1; 20; 30) nach einem der Ansprüche 1 bis 5, **dadurch gekennzeichnet, dass** der Aufsatz (1; 20; 30) als ein Verschluss (1) ausgebildet ist, der ein Basisteil (3) zum Befestigen des Verschlusses (1) an der Wasch- oder Spülmittelflasche und einen Klappdeckel (2) zum Öffnen und Schließen des Verschlusses (1) umfasst.

7. Aufsatz (1; 20; 30) nach Anspruch 6, **dadurch gekennzeichnet, dass** der Klappdeckel (2) ein als Dichtungselement dienender Verschlussstopfen (13) umfasst, der in einer geschlossenen Position des Klappdeckels (2) in einer Ausgusstülle (12) des Basisteils (2) sitzt.

8. Aufsatz (1; 20; 30) nach einem der Ansprüche 1 bis 6, **dadurch gekennzeichnet, dass** das Dichtungselement (28; 39) in Einsatzlage des Aufsatzes an einer Dichtfläche der Wasch- oder Spülmittelflasche anliegt.

9. Aufsatz (1; 20; 30) nach einem der Ansprüche 1 bis 8, **dadurch gekennzeichnet, dass** durch die Nebenkomponente ein weiteres mit dem Dichtungselement (13) einstückig ausgebildetes Element gebildet ist, das eine von außen zugängliche Außenfläche aufweist.

10. Verfahren zur Herstellung eines Aufsatzes (1; 20) für eine Wasch- oder Spülmittelflasche, wobei der Aufsatz (1; 20; 30) ein Dichtungselement (13; 28; 39) aufweist, in einem Mehrkomponenten-Spritzgussverfahren spritzgegossen wird und eine Hauptkomponente sowie eine Nebenkomponente zur Ausbildung des Dichtungselements (13; 28; 39) aufweist, von denen eine einen Marker umfasst, wobei nach dem Spritzgussverfahren der Aufsatz (1; 20; 30) mit UV-Licht oder IR-Licht beaufschlagt wird, eine Aufnahmeeinheit unter dem UV-Licht oder dem IR-Licht eine Aufnahme des Aufsatzes erstellt, und wobei die Aufnahme ausgewertet wird, um das Vorhandensein eines auf den Marker zurückzuführenden Kontrasts zwischen der Nebenkomponente und der Hauptkomponente festzustellen.

11. Verfahren nach Anspruch 10, **dadurch gekennzeichnet, dass** der Aufsatz (1; 20; 30) als Ausschuss gewertet wird, wenn bei UV-Licht oder IR-Licht der Kontrast einen bestimmten Schwellenwert nicht erreicht.

12. Verfahren nach Anspruch 10, **dadurch gekennzeichnet, dass** der Aufsatz (1; 20; 30) als Ausschuss gewertet wird, wenn bei einem Vergleich mit einem Referenzbild unter UV-Licht oder IR-Licht ein bestimmter Schwellenwert überschritten wird.

13. Verfahren nach einem der Ansprüche 10 bis 12, **dadurch gekennzeichnet, dass** im Spritzgussverfahren zunächst die Nebenkomponente und danach die Hauptkomponente spritzgegossen werden.

14. Verfahren nach einem der Ansprüche 10 bis 13, **dadurch gekennzeichnet, dass** als Marker eine Substanz in der Nebenkomponente dient, die eine Absorption im IR-Spektrum bei einer vorbestimmten Wellenzahl verursacht, bei der eine Absorption im IR-Spektrum der Hauptkomponente nicht gegeben ist.

## Claims

1. A cap (1; 20; 30) for a detergent or dishwashing liquid bottle, the cap (1; 20; 30) being produced in a multi-component injection molding process from a main component and at least one secondary component, with a sealing element (13; 28) being formed by the secondary component, **characterized in that** the main component or the secondary component has a marker to which a contrast between the main component and the secondary component can be attributed in the presence of UV light or IR light.

2. The cap (1; 20; 30) according to claim 1, **characterized in that** the secondary component forming the sealing element (13; 28; 39) has the marker.

3. The cap (1; 20; 30) according to claim 1 or 2, **characterized in that** the secondary component is softer than the main component.

4. The cap (1; 20; 30) according to claim 1 or 2, **characterized in that** the secondary component is harder than the main component.

5. The cap (1; 20; 30) according to one of claims 1 to 4, **characterized in that** the secondary component has a Shore A hardness of from 30 to 90 ShA at 23 °C.

6. The cap (1; 20; 30) according to one of claims 1 to 5, **characterized in that** the cap (1; 20; 30) is designed as a closure (1) which comprises a base part (3) for fastening the closure (1) to the detergent or dishwashing liquid bottle and a hinged lid (2) for opening and closing the closure (1).

7. The cap (1; 20; 30) according to claim 6, **characterized in that** the hinged lid (2) comprises a closure plug (13) which is used as a sealing element and which sits in a pouring spout (12) of the base part (2) in a closed position of the hinged lid (2).

8. The cap (1; 20; 30) according to one of claims 1 to 6, **characterized in that** the sealing element (28; 39) abuts a sealing surface of the detergent or dishwashing liquid bottle when the cap is in the use position.

9. The cap (1; 20; 30) according to one of claims 1 to 8, **characterized in that** a further element is formed integrally with the sealing element (13) by the secondary component, which further element has an externally accessible outer surface.

10. A method for producing a cap (1; 20) for a detergent or dishwashing liquid bottle, wherein the cap (1; 20; 30) has a sealing element (13; 28; 39), is injection molded in a multi-component injection molding process and has a main component and a secondary component for forming the sealing element (13; 28; 39), one of which comprises a marker, wherein the cap (1; 20; 30) is exposed to UV light or IR light following the injection molding process, a capture unit captures an image of the cap under the UV light or the IR light, and wherein the image is evaluated in order to determine the presence of a contrast, which can be attributed to the marker, between the secondary component and the main component.

11. The method according to claim 10, **characterized in that** the cap (1; 20; 30) is considered to be a reject if the contrast does not reach a certain threshold value in the presence of UV light or IR light.

12. The method according to claim 10, **characterized in that** the cap (1; 20; 30) is considered to be a reject if a certain threshold value is exceeded in a comparison with a reference image under UV light or IR light.

13. The method according to one of claims 10 to 12, **characterized in that** first the secondary component and then the main component are injection molded in the injection molding process.

14. The method according to one of claims 10 to 13, **characterized in that**, as a marker, a substance in the secondary component is used which causes absorption in the IR spectrum at a predetermined wave number at which there is no absorption in the IR spectrum of the main component.

## Revendications

1. Capuchon (1 ; 20 ; 30) destiné à une bouteille de détergent ou de produit vaisselle, le capuchon (1 ; 20 ; 30) étant fabriqué dans un procédé de moulage par injection à plusieurs composants à partir d'un composant principal et d'au moins un composant secondaire, un élément d'étanchéité (13 ; 28) étant formé par le composant secondaire, **caractérisé en ce que** le composant principal ou le composant secondaire présente un marqueur auquel est dû un contraste entre le composant principal et le composant secondaire dans une lumière UV ou une lumière IR.

2. Capuchon (1 ; 20 ; 30) selon la revendication 1, **caractérisé en ce que** le composant secondaire formant l'élément d'étanchéité (13 ; 28 ; 39) présente le marqueur.

3. Capuchon (1 ; 20 ; 30) selon la revendication 1 ou 2, **caractérisé en ce que** le composant secondaire est plus mou que le composant principal.

4. Capuchon (1 ; 20 ; 30) selon la revendication 1 ou 2, **caractérisé en ce que** le composant secondaire est plus dur que le composant principal.

5. Capuchon (1 ; 20 ; 30) selon l'une quelconque des revendications 1 à 4, **caractérisé en ce que** le composant secondaire présente une dureté Shore A de 30 à 90 ShA à 23 °C.

6. Capuchon (1 ; 20 ; 30) selon l'une quelconque des revendications 1 à 5, **caractérisé en ce que** le capuchon (1 ; 20 ; 30) est réalisé sous la forme d'une fermeture (1), laquelle comprend une partie de base (3) destinée à fixer la fermeture (1) à la bouteille de détergent ou de produit vaisselle et un couvercle à charnière (2) destiné à ouvrir et à fermer la fermeture (1).

7. Capuchon (1 ; 20 ; 30) selon la revendication 6, **caractérisé en ce que** le couvercle à charnière (2) comprend un bouchon de fermeture (13) servant d'élément d'étanchéité, lequel, dans une position fermée du couvercle à charnière (2), se trouve dans un bec verseur (12) de la partie de base (2).

8. Capuchon (1 ; 20 ; 30) selon l'une quelconque des revendications 1 à 6, **caractérisé en ce que** l'élément d'étanchéité (28 ; 39) repose contre une surface d'étanchéité de la bouteille de détergent ou de produit vaisselle lorsque le capuchon est en cours d'utilisation.

9. Capuchon (1 ; 20 ; 30) selon l'une quelconque des revendications 1 à 8, **caractérisé en ce qu'**un autre élément réalisé d'une seule pièce avec l'élément d'étanchéité (13) est formé par le composant secondaire, lequel autre élément présente une surface externe accessible de l'extérieur.

10. Procédé de fabrication d'un capuchon (1 ; 20) destiné à une bouteille de détergent ou de produit vaisselle, le capuchon (1 ; 20 ; 30) présentant un élément d'étanchéité (13 ; 28 ; 39), étant moulé par injection dans un procédé de moulage par injection à plusieurs composants et présentant un composant principal ainsi qu'un composant secondaire destiné à former l'élément d'étanchéité (13 ; 28 ; 39), dont l'un comprend un marqueur, le capuchon (1 ; 20 ; 30) étant exposé à une lumière UV ou à une lumière IR après le procédé de moulage par injection, une unité de prise de vues générant une prise de vues du capuchon sous la lumière UV ou la lumière IR, et la prise de vues étant évaluée afin de déterminer la présence d'un contraste dû au marqueur entre le composant secondaire et le composant principal.

11. Procédé selon la revendication 10, **caractérisé en ce que** le capuchon (1 ; 20 ; 30) est évalué comme étant un rebut si le contraste n'atteint pas une certaine valeur seuil dans une lumière UV ou une lumière IR.

12. Procédé selon la revendication 10, **caractérisé en ce que** le capuchon (1 ; 20 ; 30) est évalué comme étant un rebut si une certaine valeur seuil est dépassée par rapport à une image de référence sous lumière UV ou lumière IR.

13. Procédé selon l'une quelconque des revendications 10 à 12, **caractérisé en ce que**, dans le procédé de moulage par injection, d'abord le composant secondaire puis le composant principal sont moulés par injection.

14. Procédé selon l'une quelconque des revendications 10 à 13, **caractérisé en ce qu'**une substance dans le composant secondaire sert de marqueur, laquelle provoque une absorption dans le spectre IR pour un nombre d'ondes prédéterminé pour lequel une absorption dans le spectre IR du composant principal n'est pas définie.
